# EUROPÄISCHE PATENTANMELDUNG

(11) **EP 0 791 890 A2**
(43) Veröffentlichungstag der Anmeldung: **27.08.1997**
(21) Anmeldenummer: 96108069.4
(22) Anmeldetag: 21.05.1996
(51) Int. Cl.: G06K 7/06

(54) **Mobiles Chipkarten-Lesemodul**

(30) Priorität: 05.02.1996 DE 19604031
(71) Anmelder: Neifer, Wolfgang, 85354 Freising (DE)
(72) Erfinder: Neifer, Wolfgang, 85354 Freising (DE)
(74) Vertreter: Kiessling, Christian

(57) **Zusammenfassung**

Bei einem mobilen Chipkarten-Lesemodul (20) mit einem die Chipkarte (10) aufnehmenden Kanal (5), in dem ein Lesekopf zum Lesen der Chipkarte (10) angeordnet ist, einem vorderen Bereich, der in die Aufnahmeöffnung eines Computers eingeschoben werden kann, wobei die Höhe und Breite des vorderen Bereichs (230) um soviel kleiner als diejenigen der Aufnahmeöffnung ausgelegt sind, daß dieser Bereich (230) des Lesemoduls schlüssig in die Aufnahmeöffnung des Computers eingeführt werden kann, einem hinteren Bereich (220), der kürzer als der vordere Bereich (230) ist, wobei Höhe und Breite des hinteren Bereichs (220) jeweils größer als diejenigen der Aufnahmeöffnung des Computers sind, wobei in dem hinteren Bereich (220) eine Führung für die einzuschiebende Chipkarte (10) vorgesehen ist, wird eine erhöhte Sicherheit bei der Übertragung von Datensignalen mit einem Computer dadurch erreicht, daß eine im hinteren Bereich angeordnete vertilale Andruckfeder (3) vorgesehen ist, durch die die Chipkarte (10) beim Einführen in das Lesemodul (20) in Richtung auf eine Seitenwand des Kanals (5) gedrückt wird und durch die die Lage der Chipkarte (10) in eingeführtem Zustand in dem Lesemodul (20) fixiert ist.

## Beschreibung

Die Erfindung betrifft ein mobiles Chipkarten-Lesemodul mit einem eine Chipkarte aufnehmenden Kanal, in dem ein Lesekopf zum Lesen der Chipkarte angeordnet ist, einem vorderen Bereich, der in eine Aufnahmeöffnung eines Computers eingeschoben werden kann, wobei Höhe und Breite des vorderen Bereichs um soviel kleiner als diejenigen der Aufnahmeöffnung ausgelegt sind, daß dieser Bereich schlüssig in die Aufnahmeöffnung des Computers eingeführt werden kann, einem hinteren Bereich, der kürzer als der vordere Bereich ist, wobei Höhe und Breite des hinteren Bereichs jeweils größer als diejenigen der Aufnahmeöffnung des Computers sind, und wobei in dem hinteren Bereich eine Führung für einzuschiebende Chipkarten vorgesehen ist.

Chipkarten-Lesemodule der oben genannten Art sind aus DE 43 10517 A1 bekannt. Sie werden als in einen entsprechenden Aufnahmekanal eines Computers einsteckbare Schnittstellen zwischen einem Computer und einer Chipkarte verwendet. Somit wird über derartige Lesemodule ein unmittelbarer Datentransfer von einem Computer auf eine Chipkarte bzw. von einer Chipkarte auf einen Computer ermöglicht.

Auf Chipkarten können Daten für unterschiedlichste Zwecke, wie z.B. zum Telefonieren, zum Steuern, zum Kontoführen, zum Sicherungsprüfen usw. gespeichert werden. Die Chipkarten haben meist das übliche Kreditkarten-Standardformat und können von Chipkartenlesern unterschiedlichster Bauformen gelesen werden. Hierbei sind auch separate Chipkartenleser bekannt, die an einen Computer angeschlossen werden, um Daten der Chipkarte in den Computer zu übertragen. Derartige separat angeordnete Geräte bedürfen jedoch einer Anschlußleitung und eines Anschlußsteckers und sind aufgrund ihrer Größe unhandlich und aufgrund der ungeschützten Steckverbindungen störanfällig.

Aufgabe der Erfindung ist es, ein Chipkarten-Lesemodul zu schaffen, bei dem die Sicherheit des Datentransfers mit einem Computer verbessert ist.

Für ein Chipkarten-Lesemodul der eingangs genannten Art wird diese Aufgabe erfindungsgemäß dadurch gelöst, daß eine im hinteren Bereich des Lesemoduls angeordnete vertikale Andruckfeder vorgesehen ist, durch die die Chipkarte beim Einführen in das Lesemodul in Richtung auf eine Seitenwand des Kanals gedrückt wird und durch die die Lage der Chipkarte in eingeführtem Zustand in dem Lesemodul fixiert ist.

Bevorzugte Ausgestaltungen der Erfindung sind Gegenstand der Unteransprüche.

Bei dem erfindungsgemäßen Chipkarten-Lesemodul wird erreicht, daß der an einer Oberfläche der Chipkarte angeordnete Chip über dem Lesekopf des Moduls zu liegen kommt und die Chipkarte in dieser Position in dem Kanal des Lesemoduls durch die vertikale Andruckfeder fixiert wird, so daß ein Verschieben des Chips bezüglich des Lesekopfes verhindert wird und eine sichere Datenübertragung somit gewährleistet ist.

Obwohl die Breite der Chipkarte und damit die Breite des Kanals in dem Chipkarten-Lesemodul etwa gleich breit ist wie der Aufnahmekanal eines Computers für Module und in diesem Bereich somit für eine Führungseinrichtung an den Kanalseiten kein Raum ist, ist die Chipkarten-Lesevorrichtung in den Aufnahmekanal des Computers einschiebbar, da die Chipkarte in dem hinteren Bereich des Chipkarten-Lesemoduls, der kürzer als der vordere Bereich ist, von Führungseinrichtungen so geführt wird, daß ein Verdrehen der Chipkarte um ihre Hochachse verhindert wird und die Chipkarte somit nur noch in eine Richtung geschoben werden kann.

Durch die erfindungsgemäße Chipkarten-Lesevorrichtung werden neue Dienstleistungen und Arbeiten auf besonders platzsparende und konstruktiv einfache Weise bei größter Datensicherheit ermöglicht, insbesondere Datenübertragungen, wie elektronische Geldüberweisungen, Zugangssicherungen, Übertragungen medizinischer Daten oder das Übertragen von Computerdateien von einem Computer auf eine Chipkarte bzw. in umgekehrter Richtung. Darüberdinaus bietet die erfindungsgemäße Chipkarte gemäß bevorzugter Ausführungsformen den Vorteil, daß sie sowohl als kontaktierende [ICC, integrated cirquit card] als auch als kontaktlose [CICC, contactless integrated cirquit card] Chipkarte verwendet werden kann.

Vorteilhaft ist es, wenn das Chipkarten-Lesemodul am Ende des vorderen Bereichs des die Chipkarte aufnehmenden Kanals zur seitlichen Fixierung der eingeschobenen Chipkarte zwei im Querschnitt dreiecksförmige Nasen aufweist, deren jeweils nach innen weisende Flächen an den abgerundeten Eckseiten einer eingeschobenen Chipkarte zu liegen kommen. Dadurch wird erreicht, daß eine Chipkarte, die seitlich ein wenig verschoben in den die Chipkarte aufnehmenden Kanal gesteckt wurde, bzw. eine Chipkarte, die geringfügig um ihre Hochachse verdreht wurde, beim Anschlag der Chipkarte gegen das Ende des Kanals so geführt und fixiert wird, daß der Chip der Chipkarte automatisch über dem Lesekopf zu liegen kommt.

Gemäß einer weiteren bevorzugten Ausführungsform ist das erfindungsgemäße Chipkarten-Lesemodul zum Zweck der Abfrage von auf der Chipkarte gespeicherten Daten mit einer von einer Batterie gespeisten, mit dem Lesekopf verbundenen CPU versehen, die mit einer Anzeige verbunden ist, die über Shift-Knöpfe steuerbar ist. Dadurch wird es einem Benutzer es Lesemoduls ermöglicht, bestimmte auf der Chipkarte gespeicherte Daten abzufragen. Die CPU kann zu diesem Zweck so programmiert sein, daß nach dem Drücken eines Tasters auf der Anzeige eine bestimmte Kennzeichnungsgröße wie z.B. ein aktueller Kontostand angezeigt wird, und bei Betätigung der Shift-Knöpfe sukzessiv weitere Kennzeichnungsgrößen wie etwa die zuletzt betätigten Bewegungen in absteigender bzw. in aufsteigender Reihenfolge angezeigt werden.

Gemäß einer weiteren bevorzugten Ausführungsform ist das Chipkarten-Lesemodul mit einem Mikrophon versehen, mit dem der CPU über einen Wortkenner Befehle eingegeben werden können. Dadurch ist es beispielsweise ermöglicht, bestimmte Kennzeichnungsgrößen auf der Anzeige auch durch das akustische Eingeben von Kennungswörtern abzufragen. Es ist aber auch möglich, mittels über das Mikrophon eingegebener Kennungswörter Befehle einzugeben, die über den Lesekopf auf die Chipkarte bzw. auf den Chip übertragen werden. Somit ist es mit Hilfe des erfindungsgemäßen Chipkarten-Lesemoduls möglich, Veränderungen von auf dem Chip der Chipkarte gespeicherten Daten vorzunehmen. In diesem Zusammenhang ist es unter Umständen wichtig, sicherzustellen, daß es nur einem bestimmten Personenkreis ermöglicht ist, Veränderungen von auf der Chipkarte gespeicherten Karten vorzunehmen.

Zu diesem Zweck ist das Chipkarten-Lesemodul gemäß einer bevorzugten Ausführungsform mit einem Aufnahmeschacht für ein Identifikationsmodul (SIM, subscriber identification modul) bzw. ein Zugangsmodul (SAM, security access modul) versehen. Diese Module können so betrieben werden, daß sie eine Frequenzanalyse von über dem Mikrophon eingegebenen Worten vornehmen und mit Hilfe entsprechender Mustererkennungsverfahren bestimmte Personen eines vorherbestimmten Personenkreises identifizieren, oder sie können so ausgelegt sein, daß sie bei Eingabe einer bestimmten Zahlenkombination über ein nicht dargestelltes Eingabefeld den Zugang zum Lesemodul ermöglichen. Anstelle von SAM/SIM-Modulen können auch auch ROS-Module (record on silicon - Module) in diesen Aufnahmeschacht eingebracht werden und so mit der Chipkarte gekoppelt werden. Derartige, mit mindestens einem Chip versehene Module, weisen eine sehr große Speicherkapazität auf und werden insbesondere für das Speichern von Software oder Bilddaten (Foto, Video) verwendet.

Gemäß einer weiteren wichtigen Ausführungsform ist das erfindungsgemäße Lesemodul zum Zweck der Kommunikation bzw. dem Datentransfer mit einer anderen Vorrichtung bzw. mit einem anderen Computer mit einer Antenne versehen. Dies setzt voraus, daß eine entsprechende weitere Antenne an der anderen Vorrichtung bzw. dem anderen Computer vorgesehen ist und beide Vorrichtungen mit Einrichtungen zum Modulieren/Demodulieren von elektromagnetischen Wellen einer geeigneten Frequenz versehen sind. Durch ein entsprechendes vorzugsweise codiertes Signalübertragungsverfahren wird ermöglicht, daß das Lesemodul zum Zweck der Kommunikation mit einem anderen Computer nicht in direkten physikalischen Kontakt mit diesem gebracht werden muß, sondern daß eine entsprechende Signalübertragung auch dann durchgeführt werden kann, wenn sich die Chipkarte nur in der näheren Umgebung, in der Regel im Bereich weniger Meter, von dem Computer entfernt befindet. Im Falle einer Kontoführung wird es dadurch ermöglicht, einen bestimmten Betrag von dem auf der Chipkarte geführten Konto durch einfaches Vorbeigehen an einer mit einem entsprechenden Computer versehenen Kasse vorzunehmen. Eine derartige Ausführungsform bietet darüberhinaus den Vorteil, das die für einen Datentransfer zu oder von der Chipkarte benötigte Energie von einer entspechenden, mit einer Antenne versehenen Vorrichtung in Form von elekromagnetischen Wellen geeigneter Frequenz geliefert werden kann, so daß die Chipkarte in diesem Fall keine interne Stromquelle aufweisen muß. Anstelle einer Antenne kann auch eine Einrichtung für eine kapazitive oder eine induktive Kopplungen vorgesehen sein.

Ebenfalls zum Zweck der Kommunikation bzw. dem Datentransfer mit einer anderen Vorrichtung bzw. mit einem anderen Computer kann das erfindungsgemäße Chipkarten-Lesemodul mit einem Infrarotsender/-Empfänger versehen sein. In analoger Weise können damit mit Hilfe modulierter Lichtsignale Datensignale im Bereich einer vorherbestimmten Entfernung zwischen der Chipkarte und einem Computer ausgetauscht werden, ohne daß es notwendig ist, die Chipkarte in direkten Kontakt mit dem Computer gebracht zu bringen.

Im folgenden wird die Erfindung anhand bevorzugter Ausführungsformen erläutert, die in den Figuren der Zeichnung dargestellt sind. Darin zeigt:
- Fig. 1: eine Draufsicht einer erfindungsgemäßen Chipkarten-Lesevorrichtung im ganzen,
- Fig. 2: eine Querschnittsansicht des hinteren Bereichs der Chipkarten-Lesevorrichtung,
- Fig. 3: einen Querschnitt des linksseitigen vorderen Bereichs des Lesemoduls in der Ebene der Linie I-II der Fig. 1,
- Fig. 4: eine Draufsicht einer weiteren bevorzugten Ausführungsform des erfindungsgemäßen Chipkarten-Lesemoduls.

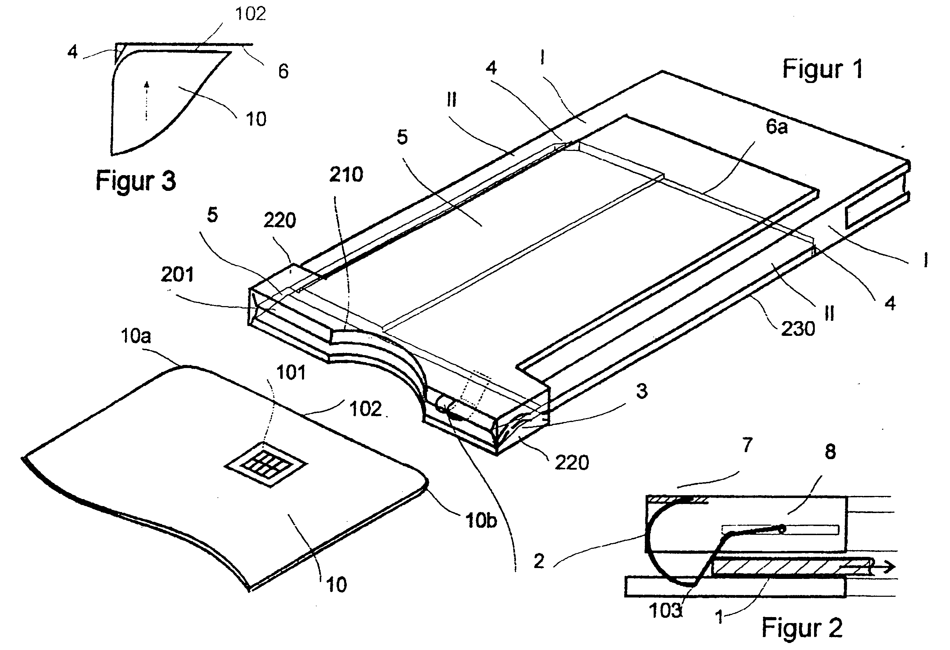

Fig. 1 zeigt eine Chipkarte 10, auf deren Oberfläche ein Chip 110 angeordnet ist. Das mobile Chipkarten-Lesemodul 20 ist mit einem Kanal 5 versehen, der zur Aufnahme der Chipkarte dient. Bei vollständig eingeschobener Chipkarte 10 in den Kanal 5 grenzen die abgerundeten Eckseiten 10a und 10b an die jeweils nach innen weisenden Flächen von im Querschnitt dreiecksförmigen Nasen 4, die zur seitlichen Fixierung einer in den Kanal 5 eingeschobenen Chipkarte 10 an den Seiten des vorderen Endes 6 des Kanals 5 vorgesehen sind. Das Lesemodul weist einen nicht dargestellten Lesekopf auf, dessen Kontakte bei vollständig in den Kanal 5 des Lesemoduls 20 eingeschobener Chipkarte 10 an die Kontaktflächen des Chips 101 angrenzen und so einen elektrischen Kontakt herstellen. Wie in Fig. 3 dargestellt, ist der Abstand der vorderen Spitzen der im Querschnitt dreiecksförmigen Nasen 4 geringfügig kürzer als die volle Breite der Chipkarte 10, so daß die in Richtung auf die einzuführende Chipkarte hinweisenden vorderen Spitzen der Nasen 4 im Zusammenspiel mit den abgerundeten Eckseiten 10a bzw. 10b eine die Vorderseite 102 der Chipkarte 10 zentrierende Wirkung in Bezug auf die Fixierung der Chipkarte 10 in dem Kanal 5 ausüben.

Das Chipkarten-Lesemodul weist im Bereich seiner Frontfläche 201 eine Einkerbung 210 auf, die dazu dient zu ermöglichen, daß die vollständig in den Kanal 5 des Lesemoduls 20 eingeschobene Chipkarte 10 zum Zweck des Herausziehens aus dem Kanal 5 von einem Benutzer ergriffen werden kann. Der vordere Bereich 230 des Lesemoduls 20 ist in seiner Höhe und in seiner Breite um soviel kleiner ausgelegt als die Höhe und Breite der Aufnahmeöffnung des Computers, daß dieser Bereich 230 des Lesemoduls 20 schlüssig in die Aufnahmeöffnung des Computers eingeführt werden kann. Der hintere Bereich 220 des Lesemoduls 20 ist in seiner Höhe und Breite jeweils größer bemessen als die Aufnahmeöffnung bzw. der Aufnahmekanal eines Computers und weist eine seitliche Begrenzung des Kanals 5 auf, durch die eine seitliche Führung der Chipkarte bewirkt wird. Bei der in Fig. 1 dargestellten Ausführungsform wird diese seitliche Führung durch eine horizontal wirkende Andruckfeder 3 verstärkt, durch die ein mögliches Spiel der Chipkarte 10 in der Führung des hinteren Bereichs verhindert wird. Da sich die horizontal wirkende Andruckfeder 3 im inneren des hinteren Bereichs des Kanals befindet, ist sie in Fig. 1 gestrichelt dargestellt.

Um zu bewirken, daß die Chipkarte 10 in in dem Kanal 5 des Lesemoduls 20 eingeführten Zustand fixiert eingerastet werden kann, ist eine vertikale Andruckfeder 2 vorgesehen, die in Fig. 2 im Querschnitt dargestellt ist. Die vertikale Andruckfeder 2 ist mit ihrem einen Ende in einer Verankerung 7 im hinteren Bereich des Lesemoduls verankert. Das andere Ende der Andruckfeder 2 ist in einem Gleitlager 8 im hinteren Bereich des Lesemoduls beweglich gelagert. Wird eine Chipkarte in den Kanal 5 eingeführt, so schiebt sich das andere Ende der Andruckfeder 2 in seiner vollen Länge in das Gleitlager 8, wodurch die Andruckfeder 2 einen kleinen Radius annimmt und aufgrund ihrer verkleinerten Abmessungen den Kanal 5 freigibt und ein Einführen der Chipkarte 10 in den Kanal 5 somit ermöglicht. Ist die Chipkarte 10 soweit in den Kanal 5 eingeführt, daß ihre Eckseiten 10a bzw. 10b an den Nasen 4 zu liegen kommen, so schnappt die Andruckfeder 2 aufgrund einer Vorspannung zurück in die in Fig. 2 dargestellte Lage, in der sie an der Hinterkante 103 der Chipkarte zu liegen kommt und dadurch die Chipkarte 10 in dem Kanal 5 fixiert. Die Chipkarte kann hiernach nur unter Aufbringung einer erhöhten Kraftanwendung seitens des Benutzers durch Eingriff in die Einkerbung 210 aus dem Kanal 5 des Lesemoduls 20 herausgezogen werden.

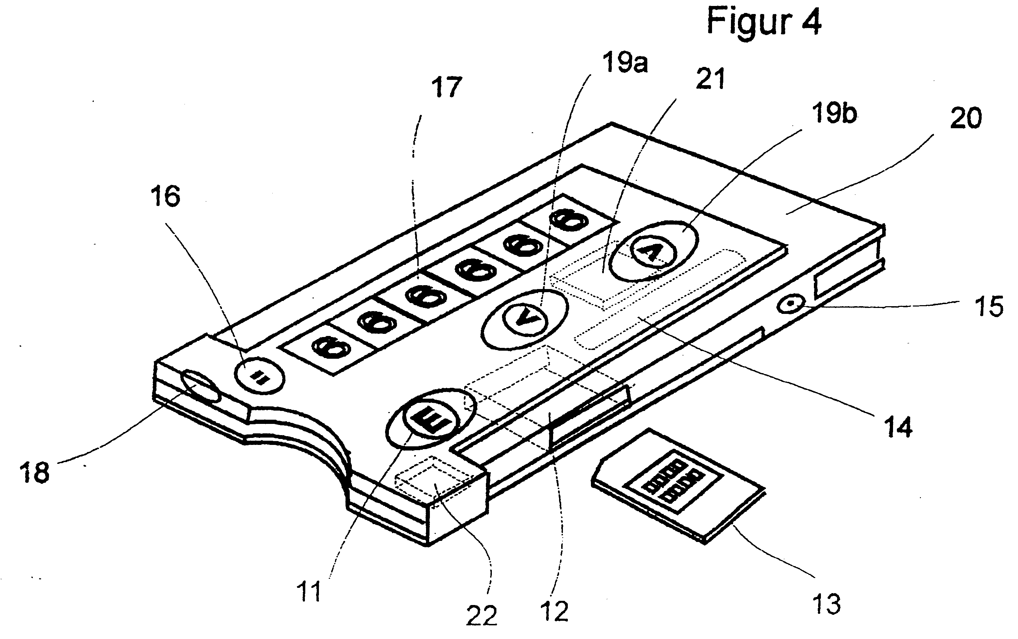

Die in Fig. 4 dargestellte Ausführungsform des erfindinngsgemäßen Lesemoduls 20 weist eine Anzeige 17, einen Infrarotsender/-Empfänger 18, eine Antenne 14, ein Mikrophon 16, einen Taster 11 sowie Shift-Knöpfe 19 auf. Des weiteren ist sie mit einem inneren, gestrichelt dargestellten Aufnahmeschacht 12 für ein SAM/SIM-Modul 13 versehen, in den das Modul 13 eingeführt werden kann. Ein derartiges Modul dient zum Zweck der Identifikation eines Benutzers und ist in der Lage, einen Zugang zu dem Lesemodul 20 zu ermöglichen oder zu sperren (SIM = subscriber identification modul, SAM = security access modul).

Das in Fig. 4 dargestellte Lesemodul 20 weist ebenso wie dasjenige der Fig. 1 eine nicht dargestellte Batterie sowie eine nicht dargestellte CPU auf. Eine Freigabe des Lesemoduls 20 kann unter Verwendung des SAM/SIM-Moduls durch eine Spracheingabe über das Mikrophon 16 oder durch die Eingabe einer Zahlenkombination auf einer nicht dargestellten Tastatur erfolgen. Der Benutzer hat dann die Möglichkeit, das Lesemodul 20 über einen Taster 11 und Shift-Knöpfe 19 zu betreiben und bestimmte Daten abzufragen, die an der Anzeige 17 dargestellt werden. Der Infrarotsender/-Empfänger 18 und die Antenne 14 dienen zur Fernübertragung von Daten mittels Licht bzw. elektromagnetischer Strahlung im Radiofrequenzbereich, mit einem anderen Computer. Ein Anschlußkontakt 15 dient zum Anschluß einer externen Antenne, durch die ein Signalaustausch über eine größere Entfernung ermöglicht wird. Dieser Anschluß kann des weiteren zum Übertragen von Signalen per elektrischer Leitung, z.B. auf einen anderen Computer oder ein zelluläres Telefon verwendet werden.

## Patentansprüche

1. Mobiles Chipkarten-Lesemodul (20) mit:
einem eine Chipkarte (10) aufnehmenden Kanal (5), in dem ein Lesekopf zum Lesen der Chipkarte (10) angeordnet ist,
einem vorderen Bereich (230), der in eine Aufnahmeöffnung eines Computers eingeschoben werden kann, wobei Höhe und Breite des vorderen Bereichs (230) um soviel kleiner als diejenigen der Aufnahmeöffnung ausgelegt sind, daß dieser Bereich des Lesemoduls schlüssig in die Aufnahmeöffnung des Computers eingeführt werden kann,
einem hinteren Bereich (220), der kürzer als der vordere Bereich ist, wobei Höhe und Breite des hinteren Bereichs (220) jeweils größer als diejenigen der Aufnahmeöffnung des Computers sind, und wobei in dem hinteren Bereich eine Führung für die einzuschiebende Chipkarte vorgesehen ist,
**gekennzeichnet** durch
eine im hinteren Bereich angeordnete vertikale Andruckfeder (2), durch die die Chipkarte (10) beim Einführen in das Lesemodul (20) in Richtung auf eine Seitenwand des Kanals (5) gedrückt wird und durch die die Lage der Chipkarte (10) in eingeführtem Zustand in dem Lesemodul (20) fixiert ist.

2. Mobiles Chipkarten-Lesemodul nach Anspruch 1, dadurch gekennzeichnet, daß am Ende (6) des vorderen Bereichs des die Chipkarte aufnehmenden Kanals (5) zur seitlichen Fixierung der Chipkarte zwei im Querschnitt dreiecksförmige Nasen (4) angeordnet sind, deren jeweils nach innen weisende Flächen an den abgerundeten Eckseiten der eingeschobenen Chipkarte zu liegen kommen.

3. Mobiles Chipkarten-Lesemodul nach einem der Ansprüche 1 oder 2, dadurch gekennzeichnet, daß das Lesemodul (20) zum Zweck der Abfrage von auf der Chipkarte gespeicherten Daten mit einer von einer Batterie gespeisten, mit dem Lesekopf verbundenen CPU versehen ist, die mit einer Anzeige (17) verbunden ist, die über Shift-Knöpfe (19) steuerbar ist.

4. Mobiles Chipkarten-Lesemodul nach einem der vorhergehenden Ansprüche, dadurch gekennzeichnet, daß das Lesemodul (20) mit einem Mikrophon (16) verbunden ist, mit dem der CPU über einen Wortkenner Befehle eingegeben werden können.

5. Mobiles Chipkarten-Lesemodul nach Anspruch 4, dadurch gekennzeichnet, daß die über das Mikrophon (16) eingegebenen Befehle über den Lesekopf auf den Chip (101) der Chipkarte (10) eingegeben werden können.

6. Mobiles Chipkarten-Lesemodul, dadurch gekennzeichnet, daß das Lesemodul (20) einen Aufnahmebereich (12) für ein Identifikationsmodul bzw. ein Zugangsmodul (SIM/SAM) (13) versehen ist.

7. Mobiles Chipkarten-Lesemodul nach einem der vorhergehenden Ansprüche, dadurch gekennzeichnet, daß das Lesemodul (20) zum Zweck der Kommunikation bzw. dem Datentransfer mit einer anderen Vorrichtung bzw. mit einem anderen Computer mit einer Antenne (14) versehen ist.

8. Mobiles Chipkarten-Lesemodul nach einem der vorhergehenden Ansprüche, dadurch gekennzeichnet, daß das Lesemodul (20) zum Zweck der Kommunikation bzw. dem Datentransfer mit einer anderen Vorrichtung bzw. einem anderen Computer mit einem Infrarotsender/-Empfänger (18) versehen ist.
